# EUROPÄISCHE PATENTSCHRIFT

(11) **EP 2 957 486 B1**
(45) Veröffentlichungstag und Bekanntmachung des Hinweises auf die Patenterteilung: **10.01.2018**
(21) Anmeldenummer: 15001087.4
(22) Anmeldetag: 15.04.2015
(51) Int. Cl.: B62D 29/00, B62D 49/06, A01D 34/82

(54) **HÖHENVERSTELLBARE FÜHRUNGSVORRICHTUNG FÜR EIN ARBEITSGERÄT**
HEIGHT ADJUSTABLE GUIDING DEVICE FOR A WORK IMPLEMENT
DISPOSITIF DE GUIDAGE RÉGLABLE EN HAUTEUR POUR UN APPAREIL DE TRAVAIL

(30) Priorität: 22.05.2014 DE 102014007559
(43) Veröffentlichungstag der Anmeldung: 23.12.2015
(73) Patentinhaber: Wacker Neuson Produktion GmbH & Co. KG, 80809 München (DE)
(72) Erfinder: Rupp, Ferdinand, 80639 München (DE); Spies, Bernhard, 84095 Furth (DE)
(74) Vertreter: Müller Hoffmann & Partner

(56) Entgegenhaltungen:
- US-A- 2 763 492
- US-A- 2 786 694
- US-A- 2 791 437
- US-A- 3 416 417
- US-A- 3 791 116
- US-A- 3 817 547
- US-A- 5 842 329

## Beschreibung

Die Erfindung betrifft eine höhenverstellbare Führungsvorrichtung für ein Arbeitsgerät.

Heutzutage ist eine Vielzahl von Arbeitsgeräten in Gebrauch, zu deren Führung eine Führungsdeichsel oder ein die Höhe des Arbeitsgeräts übersteigender Handgriff benötigt wird. Solche Arbeitsgeräte sind zum Beispiel Mähgeräte oder insbesondere Bodenverdichtungsvorrichtungen, wie z.B. Vibrationsplatten oder Vibrationswalzen. Solche Bodenverdichtungsvorrichtungen bestehen im Wesentlichen aus einer Untermasse mit einem Bodenkontaktelement, das über den zu verdichteten Boden bewegt wird und mit Schwingungen beaufschlagt ist, die durch einen Schwingungserreger erzeugt werden. Der Schwingungserreger ist meist ein Krafterreger, bei dem z.B. zwei gegenläufig drehbare Unwuchtwellen eine resultierende Kraft erzeugen, die die gewünschte Schwingung herbeiführen.

Oberhalb der Untermasse ist eine relativ zu der Untermasse bewegliche Obermasse vorgesehen, die einen Antrieb, z.B. einen Verbrennungsmotor, einen Maschinenrahmen und gegebenenfalls eine Deichsel zum Führen der Vibrationsplatte aufweist. Zu der Obermasse werden meist auch noch ein Kraftstofftank. Steuerelemente und - sofern vorhanden - Teile eines Hydrauliksystems gezählt.

Solche Bodenverdichtungsvorrichtungen können zum Beispiel in Gräben eingesetzt werden und sollen auch niedrige Hindernisse, wie etwa Kanalstreben. Stromkabel, Abwasserrohre, etc., unterfahren können, die den Graben kreuzen. Auch beim Einsatz anderer Arbeitsgeräte, die mittels einer Deichsel geführt werden, kann es notwendig sein, Hindernisse zu unterfahren. Um dies bewerkstelligen zu können, müssen Führungsdeichseln der Arbeitsgeräte höhenverstellbar sein.

Eine Höhenverstellung der Führungsdeichsel wird typischerweise mittels Werkzeug erreicht (zum Beispiel: Lockern einer Schraubverbindung - Absenken der Führungsdeichsel - Festziehen der Schraubverbindung oder: Lösen einer Kontermutter - vollständiges Zurückschrauben einer Gewindespindel - Festziehen der Kontermutter). Es ist aber auch möglich, Führungsdeichseln werkzeuglos durch vollständiges Zurückdrehen einer nicht gekonterten Gewindespindel in ihrer Höhe zu verstellen.

Es ist jedoch selbst mit den bekannten werkzeuglos verstellbaren Führungsdeichseln nicht möglich, die Führungsdeichseln schnell und werkzeuglos komplett abzusenken und ebenso schnell wieder auf eine individuelle, auf den Bediener abgestimmte Arbeitshöhe zurückzusetzen. Bei den bekannten höhenverstellbaren Führungsdeichseln hat der Bediener die Wahl, die Deichsel einmalig herab zu lassen und die Maschine gebückt zu bedienen, was eine erhöhte Belastung für den Bediener darstellt, oder nach jedem unterfahrenen Hindernis die Deichsel zeitaufwändig wieder auf die Arbeitshöhe einzustellen. Dies ist aber bei einer größeren Anzahl von zu unterfahrenden Hindernissen höchst ineffizient.

Die US 3 817 547 beschreibt einen Rasenmäher mit drehbar gelagertem Griff, der mittels eines an dem Gehäuse des Rasenmähers befestigen, drehbaren Unterstützungsplatte in verschiedene Winkelstellungen gebracht werden kann.

Der Erfindung liegt die Aufgabe zugrunde, eine Führungsvorrichtung anzugeben, die rasch, werkzeuglos und ohne großen Aufwand in eine Stellung gebracht werden kann, die es ermöglicht, Hindernisse zu unterfahren, und die mit ebenso wenig Aufwand in eine zuvor eingestellte Arbeitsstellung zurückgebracht werden kann.

Die Aufgabe wird durch eine Vorrichtung gemäß den unabhängigen Patentansprüchen gelöst. Weiterbildungen sind Gegenstand der abhängigen Patentansprüche.

Eine Führungsvorrichtung zum Führen eines Arbeitsgeräts weist auf: ein Verbindungselement; ein Deichselelement, das mit dem Verbindungselement verbunden ist und relativ zu dem Verbindungselement in eine erste Stellung oder eine zweite Stellung bewegbar ist; und ein Stützelement mit einem Stützanschlag, das durch Abstützen des Stützanschlags an einem Halteelement das Deichselelement in der ersten Stellung hält. Hierbei ist das Deichselelement über das Verbindungselement mit dem Arbeitsgerät verbindbar und entweder ist das Halteelement mit dem Verbindungselement verbunden und das Stützelement mit dem Deichselelement beweglich verbunden oder das Halteelement ist mit dem Deichselelement verbunden und das Stützelement mit dem Verbindungselement beweglich verbunden. Des Weiteren ist das Deichselelement nach Lösen des Stützanschlags aus dem Halteelement in die zweite Stellung verschwenkbar.

In der erfindungsgemäßen Führungsvorrichtung wird also eine Deichsel mittels eines Stützelements derart abgestützt, dass sie in einer ersten Stellung, die einer Arbeitsstellung entspricht, gehalten wird. Das Abstützen erfolgt hierbei allein aufgrund des Gewichts des Deichselelements, ohne dass eine weitere Fixierung des Deichselelements oder des Stützelements durch eine Verklemmung, Verschraubung, etc. notwendig ist. Durch die zueinander beweglichen Verbindungen der Komponenten der Führungsvorrichtung ist es möglich, den Stützanschlag des Stützelements aus dem Halteelement zu lösen, so dass die gravitative Abstützung des Deichselelements entfällt, und hierauf das Deichselelement in eine niedrigere zweite Stellung zu bringen, die es erlaubt, Hindernissee zu unterfahren.

Dadurch ist es möglich, das Deichselelement der Führungsvorrichtung schnell und unkompliziert in eine zum Unterfahren von Hindernissen geeignete Stellung zu bringen und das über das Verbindungselement mit dem Deichselelement verbundene Arbeitsgerät weiterhin zu steuern. Das Verbindungelement kann hierbei als ein integraler Bestandteil des Arbeitsgeräts ausgebildet sein, z.B. als Teil einer Obermasse einer Bodenverdichtungsvorrichtung. Alternativ kann das Verbindungselement als separates Element ausgebildet sein, das mit dem Arbeitsgerät verbindbar ist.

Zusätzlich zur rein gravitativen Abstützung kann eine weitere mechanische Sicherung zwischen dem Halteelement und dem Stützelement vorgesehen sein. Dabei kann es sich zum Beispiel um einen Einrastmechanismus handeln, der leicht gelöst werden kann, z.B. von Hand. Dadurch wird eine zusätzliche Sicherung in der ersten Stellung, also im gewöhnlichen Arbeitsbetrieb, gewährleistet, die ein unbeabsichtigtes Lösen des Stützelements aus dem Halteelement verhindert. Da diese Sicherung leicht zu lösen ist, kann das Deichselelement dennoch schnell in die zweite Stellung gebracht werden.

Der Stützanschlag kann dann von dem Halteelement lösbar sein, wenn das Deichselelement mit Bezug auf das Verbindungselement in vertikaler Richtung nach oben geschwenkt ist. Daran anschließend kann das Deichselelement dann in die zweite Stellung verschwenkbar sein, wenn das aus dem Halteelement gelöste Stützelement ausgeschwenkt ist und das Deichselelement in vertikaler Richtung nach unten geschwenkt ist.

Auf diese Weise kann durch einfaches Anheben des Deichselelements der Stützanschlag des Stützelements aus dem Halteelement gelöst werden und daraufhin das Stützelement derart ausgeschwenkt werden, dass es sich bei erneutem Absenken des Deichselelements nicht mehr in dem Halteelement abstützen kann. Dadurch ist es möglich, das Deichselelement über die erste Stellung hinaus nach unten in die zweite, zum Unterfahren von Hindernissen geeignete Stellung abzusenken. Dies ermöglicht es, das Deichselelement schnell und unkompliziert in die zweite Stellung zu bringen.

Das Deichselelement kann aus der zweiten Stellung in vertikaler Richtung nach oben in die erste Stellung geschwenkt werden und dann in der ersten Stellung gehalten werden, wenn das Stützelement in das Halteelement eingeschwenkt ist.

Dadurch wird es ermöglicht, das Deichselelement schnell und unkompliziert aus der zweiten Stellung zurück in die erste Stellung zurückzubringen, die einer ergonomischen Arbeitsstellung entspricht. Dies geschieht durch einfaches Anheben des Deichselelements und gleichzeitiges Einschwenken des Stützelements, so dass der Stützanschlag des Stützelements im Halteelement wieder Halt findet und dadurch das Deichselelement in der ersten Stellung halten kann.

Der Stützanschlag kann ein Übertragungselements aufweisen und durch Ausüben einer Kraft auf das Übertragungselement aus dem Halteelement lösbar sein. Dadurch ist es möglich, das Stützelement werkzeuglos aus dem Halteelement zu lösen. Dies kann zum Beispiel durch eine manuelle Kraftausübung des Bedieners auf ein Ende des Stützelements und ein darauffolgendes Ausschwenken des Stützelements geschehen. Alternativ oder ergänzend kann das Stützelement auch verschiebbar angeordnet sein. Das Stützelement wird dann durch eine lineare Bewegung oder eine Kombination einer linearen Bewegung mit einer Schwenkbewegung aus dem Halteelement entfernt. Es ist auch möglich, dass das Stützelement durch eine Bedienung mit einem Fuß oder einem anderem Körperteil des Bedieners der Führungsvorrichtung ausgeschwenkt oder verschoben wird. Dies ermöglicht eine leichte und unkomplizierte Bedienung der Höhenverstellung der Führungsvorrichtung.

Ein Federelement kann das Stützelement federnd in einer Ausgangsstellung halten, in der das Stützelement das Deichselelement in der ersten Stellung hält. Das Ausschwenken des Stützelements erfolgt also gegen die federnde Wirkung des Federelements. Dadurch ist zum einen gewährleistet, dass die durch die Bodenverdichtungsvorrichtung erzeugten Schwingungen, die über das Deichselelement, das Halteelement und das Stützelement auf das Deichselelement übertragen werden, durch das Federelement gedämpft werden. Zum anderen gewährleistet das Federelement, dass das Stützelement bei Fehlen einer äußeren Kraft in die Ausgangsstellung zurück bewegt wird und somit der Stützanschlag des Stützelements bei Zurückstellen des Deichselelements aus der zweiten in die erste Stellung automatisch in dem Halteelements Halt findet. Dies führt zu einer Vereinfachung des Aufbaus der Führungsvorrichtung.

Das Stützelement weist ein Höheneinstellungselement zum Einstellen einer Winkelstellung zwischen dem Verbindungselement und dem Deichselelement'auf. Dadurch kann eine Arbeitsposition in der ersten Stellung genau auf einen Bediener des Arbeitsgeräts eingestellt werden, um ein möglichst belastungsfreies, aufrechtes Arbeiten zu erlauben. Gleichzeitig kann das Deichselelement der Führungsvorrichtung aus der ergonomisch angenehmsten Position schnell in eine zum Unterfahren von Hindernissen geeignete Stellung gebracht werden und ebenso schnell die den Bediener am wenigsten belastende erste Stellung des Deichselelements wieder eingenommen werden. Dadurch sinken die Belastungen für einen Bediener des Arbeitsgeräts beim Unterfahren von mehreren Hindernissen beträchtlich.

Das Höheneinstellungselement kann ein Stabsegment mit Rastausnehmungen aufweisen und die Winkelstellung zwischen dem Verbindungselement und dem Deichselelement in der ersten Stellung kann durch Klemmen eines Befestigungsmittels in eine der Rastausnehmungen des Stabsegments einstellbar sein. Dies ermöglicht eine einfache Einstellung der Arbeitshöhe in der ersten Stellung, die durch das Klemmen mittels eines Befestigungsmittels, wie etwa einer Schraube oder eines Bolzens, eine erhöhte Stabilität aufweist.

In der Führungsvorrichtung kann das Halteelement mit dem Verbindungselement verbunden sein und das Stützelement kann mit dem Deichselelement beweglich verbunden sein.

Das Höheneinstellungselement kann eine Spindel aufweisen und die Verbindung des Stützelements mit dem Deichselelement kann als beweglich verbundener Gewindeblock ausgebildet sein. Zudem kann die Winkelstellung zwischen dem Verbindungselement und dem Deichselelement in der ersten Stellung durch Einschrauben der Spindel in den Gewindeblock einstellbar sein. Dies ermöglicht eine leichte, werkzeuglose Einstellung der Arbeitshöhe in der ersten Stellung.

Die Winkelstellung zwischen dem Verbindungselement und dem Deichselelement in der ersten Stellung kann auch durch Verändern der Position des Halteelements einstellbar sein. Dies gewährt eine erhöhte Flexibilität bei der Einstellung der Arbeitshöhe.

Das Stützelement kann sowohl um eine horizontale Achse schwenkbar sein als auch um eine vertikale Achse schwenkbar sein. Dadurch ist eine maximale Flexibilität bei der Konstruktion der erfindungsgemäßen Führungsvorrichtung gewährleistet.

In der Führungsvorrichtung kann das Verbindungselement ein erstes Fixierelement aufweisen. Das Stützelement kann ein zweites Fixierelement aufweisen und das erste Fixierelement kann dann mit dem zweiten Fixierelement einrasten und das Deichselelement in einer dritten Stellung halten, wenn das Deichselelement nach Schwenken in vertikaler Richtung nach oben die dritte Stellung einnimmt. Hierbei kann das zweite Fixierelement dann aus dem ersten Fixierelement gelöst sein, wenn das Stützelement ausgeschwenkt oder verschoben ist und die dritte Stellung kann sich bei bestimmungsgemäßem Gebrauch der Führungsvorrichtung oberhalb der ersten Stellung befinden.

Dadurch ist es möglich, das Deichselelement durch Anheben des Deichselelements über die erste Stellung hinaus in eine dritte Stellung zu bringen, in der das Deichselelement nicht mehr rein gravitativ gehalten, sondern durch eine mechanische Fixierung mittels des zweiten Fixierelements gehalten wird. Diese dritte Stellung kann zum Beispiel eine senkrechte Stellung des Deichselelements sein, wie sie zum platzsparenden Transport des Arbeitsgeräts benötigt wird. Bei der dritten Stellung handelt es sich also typischerweise nicht um eine während des Arbeitsbetriebs benötigte Stellung, sondern vielmehr um eine dauerhafte Fixierung des Deichselelements, z.B. für den Transport oder für die Lagerung.

Gleichwohl kann das Deichselelement durch Ausschwenken oder Verschieben des Stützelements schnell zurück in die erste Stellung gebracht werden. Dies ermöglicht es, das Arbeitsgerät mit der damit verbundenen Führungsvorrichtung sicher zu transportieren und dennoch schnell für den Arbeitseinsatz bereit zu machen.

In der Führungsvorrichtung kann das Halteelement mit dem Deichselelement verbunden sein und das Stützelement kann mit dem Verbindungselement beweglich verbunden sein. Dies entspricht einer mechanischen Umkehr der oben beschriebenen Weiterbildungen, in der jeweils die Position des Halteelements und des Stützelements am Verbindungselement und am Deichselelement vertauscht sind.

Bei der Führungsvorrichtung in mechanischer Umkehr ist vorgesehen, dass das Höheneinstellungselement eine Spindel aufweist; die Verbindung des Stützelements mit dem Verbindungselement als beweglich verbundener Gewindeblock ausgebildet ist; und dass die Winkelstellung zwischen dem Verbindungselement und dem Deichselelements in der ersten Stellung durch Einschrauben der Spindel in den Gewindeblock einstellbar ist.

Bei der Führungsvorrichtung in mechanischer Umkehr kann die Winkelstellung zwischen dem Verbindungselement und dem Deichselelements in der ersten Stellung durch Verändern der Position des Halteelements am Deichselelement einstellbar sein.

Weiterhin kann das Stützelement relativ zu dem Verbindungselement um eine horizontale oder eine vertikale Achse schwenkbar sein.

Die Führungsvorrichtung in mechanischer Umkehr kann derart ausgestaltet sein, dass das Deichselelement ein erstes Fixierelement aufweist; das Stützelement ein zweites Fixierelement aufweist; das erste Fixierelement dann mit dem zweiten Fixierelement einrastet und das Deichselelement in einer dritten Stellung hält, wenn das Deichselelement nach Schwenken in vertikaler Richtung nach oben die dritte Stellung einnimmt; das zweite Fixierelement dann aus dem ersten Fixierelement gelöst ist, wenn das Stützelement ausgeschwenkt ist; und dass sich bei bestimmungsgemäßem Gebrauch der Führungsvorrichtung die dritte Stellung oberhalb der ersten Stellung befindet.

Die erfindungsgemäße Führungsvorrichtung kann zum Führen einer Bodenverdichtungsvorrichtung, insbesondere einer Vibrationsplatte oder einer Vibrationswalze genutzt werden. Damit werden die oben beschriebenen Vorteile für Bodenverdichtungsarbeiten zugänglich.

Diese und weitere Vorteile und Merkmale der Erfindung werden nachfolgend anhand von Beispielen unter Zuhilfenahme der begleitenden Figuren näher erläutert. Es zeigen:
- FIG. 1A bis 1C: eine schematische Darstellung einer Führungsvorrichtung gemäß einer Ausführungsform;
- FIG. 2A bis 2C: eine schematische Darstellung einer Führungsvorrichtung gemäß einer weiteren Ausführungsform;
- FIG. 3: eine schematische Darstellung eines Arbeitsgeräts, das mit einer Führungsvorrichtung gemäß einer Ausführungsform verbundenen ist;
- FIG. 4A und 4B: eine schematische Darstellung der Führungsvorrichtung aus FIG. 3; und
- FIG. 5: eine schematische Darstellung einer Führungsvorrichtung gemäß einer weiteren Ausführungsform.

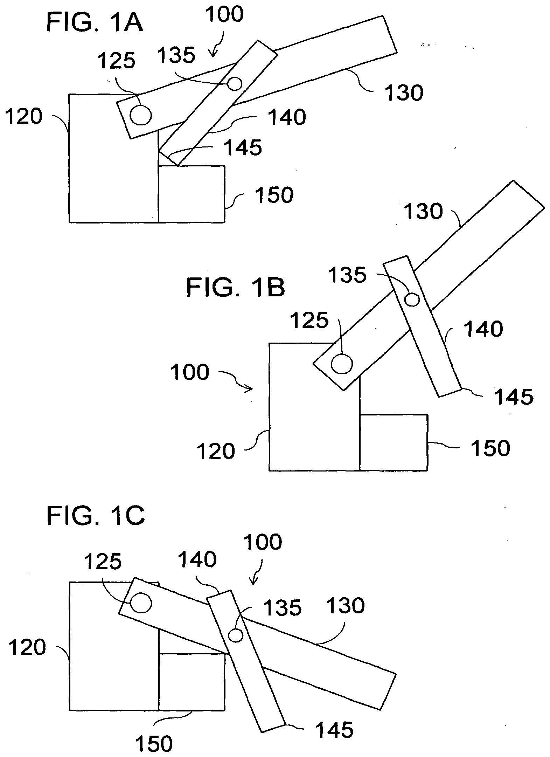

FIG. 1A bis 1C zeigen eine Ausführungsform einer Führungsvorrichtung 100 zum Führen eines Arbeitsgeräts, die ein rasches, werkzeugloses und unkompliziertes Absenken eines Deichselelements 130 aus einer ersten Stellung in eine zweite Stellung ermöglicht.

Bei dem Arbeitsgerät kann es sich zum Beispiel um eine Bodenverdichtungsvorrichtung, etwa eine handgeführte Vibrationsplatte oder Verdichtungswalze, eine Mähmaschine oder andere Maschinen mit einer Führungsdeichsel oder einem die Maschinenhöhe übersteigenden Handgriff handeln, mit denen Hindernisse unterfahren werden sollen.

FIG. 1A zeigt die Führungsvorrichtung 100 in der ersten Stellung. Die Führungsvorrichtung 100 weist ein Verbindungselement 120 auf, das zum Verbinden der Führungsvorrichtung 100 mit dem nicht dargestellten Arbeitsgerät dient. Das Verbindungselement 120 wird hierzu fest mit dem Arbeitsgerät verbunden, z.B. mit der Obermasse einer Bodenverdichtungsvorrichtung. Das Verbindungselement 120 kann zum Beispiel über Befestigungsmittel, wie etwa Schrauben, Nieten oder Bolzen, derart fest mit dem Arbeitsgerät verbindbar sein, dass das Verbindungselement 120 durch Werkzeugeinsatz wieder vom Arbeitsgerät gelöst werden kann. Das Verbindungselement 120 kann aber auch, z.B. durch Schweißen, derart fest mit dem Arbeitsgerät verbunden sein, dass es nicht mehr vom Arbeitsgerät lösbar ist. Alternativ kann das Verbindungselement 120 ein integraler Bestandteil des Arbeitsgeräts sein. Zum Beispiel kann das Verbindungselement 120 in die Obermasse der Bodenverdichtungsvorrichtung integriert sein.

Mit dem Verbindungselement 120 ist das Deichselelement 130 schwenkbar verbunden. Das Deichselelement 130 ist also über das Verbindungselement 120 mit dem Arbeitsgerät verbindbar bzw. verbunden. Das Deichselelement 130 dient zum Führen des Arbeitsgeräts durch einen Benutzer. Das Deichselelement 130 kann dazu z.B. einen Haltegriff oder ähnliches aufweisen, der es dem Benutzer erlaubt, das Arbeitsgerät in eine gewünschte Richtung zu steuern. Das Deichselelement 130 ist derart mit dem Verbindungselement 120 verbunden, dass es relativ zum Verbindungselement 120 in eine erste Stellung oder eine zweite Stellung bewegbar ist. Das Deichselelement 130 kann eine Führungsdeichsel oder ein die Höhe des Arbeitsgeräts übersteigender Handgriff sein.

In der FIG. 1A befindet sich das Deichselelement 130 in der ersten Stellung. Die Verbindung des Deichselelements 130 zum Verbindungselement 120 kann, wie in FIG. 1A dargestellt, derart ausgestaltet sein, dass das Deichselelement 130 um eine horizontale Achse 125 schwenkbar ist. Dadurch kann das Deichselelement 130 relativ zum Verbindungselement 120 vertikal nach oben und unten geschwenkt werden. Das Deichselelement 130 kann aber auch derart mit dem Verbindungselement 120 verbunden sein, dass es um eine andere als die horizontale Achse schwenkbar ist. Alternativ oder ergänzend kann das Deichselelement 130 relativ zum Verbindungselement 120 verschiebbar sein. Zum Beispiel kann das Deichselelement 130 linear in vertikaler Richtung verschiebbar sein.

In der in FIG. 1A bis 1C gezeigten Ausführungsform ist ein Stützelement 140 beweglich mit dem Deichselelement 130 verbunden. Das Stützelement 140 kann derart mit dem Deichselelement 130 verbunden sein, dass es, wie in FIG. 1A bis 2C gezeigt, um eine Achse 135 schwenkbar ist. Die Achse 135 kann, wie in FIG. 1A bis 1C gezeigt, eine horizontale Achse sein, sie kann aber auch eine vertikale Achse oder eine zwischen der Horizontalen und Vertikalen liegende Achse sein.

Alternativ oder ergänzend kann das Stützelement 140 derart mit dem Deichselelement 130 verbunden sein, dass es linear verschiebbar ist. Zum Beispiel kann das Stützelement 140 entlang der Achse 135, z.B. durch eine Führungsschiene oder mittels einer Kulissenführung, aus der Bildebene der FIG. 1A heraus verschoben werden.

Ein Halteelement 150 ist mit dem Verbindungselement 120 verbunden. Das Halteelement 150 ist in Bezug auf das Verbindungselement 120 während des Betriebs des Arbeitsgeräts nicht beweglich. Das Halteelement 150 kann ein integraler Bestandteil des Verbindungselement 120 sein, es kann aber auch durch Befestigungsmittel an dem Verbindungselement 120 angebracht sein, so dass die genaue Position des Halteelements 150 an dem Verbindungselement 120 durch Werkzeugeinsatz verändert werden kann. Das Halteelement 150 kann zum Beispiel eine Kalotte sein, es kann sich aber auch um einen einfachen Metallbolzen oder eine Aussparung im Verbindungselement 120 handeln.

Das Halteelement 150 ist derart an dem Verbindungselement 120 angebracht, dass ein Stützanschlag 145 des Stützelements 140 sich in der ersten Stellung des Deichselelements 130 auf dem Halteelement 150 abstützt. Durch das Gewicht des Deichselelements 130 wird der Stützanschlag 145 des Stützelements 140 fest auf das Halteelement 150 gedrückt und die resultierende Gegenkraft hält das Deichselelement 130 in der ersten Stellung.

Auf diese Weise wird allein aufgrund des Gewichts des Deichselelements 130 eine sichere Verbindung zwischen dem Stützelement 140 und dem Halteelement 150 gewährleistet, ohne dass eine weitere mechanische Sicherung zwischen dem Stützanschlag 145 und dem Halteelement 150 notwendig ist. Gemäß einer weiteren Ausführungsform kann aber auch eine zusätzliche mechanische Sicherung zur Fixierung des Stützanschlags 145 auf dem Halteelement 150 ausgebildet sein, z.B. durch einen Arretierungsbolzen oder andere Fixierelemente.

Das Stützelement 140 kann, wie in FIG. 1A bis 1C dargestellt, ein Stabsegment oder ein Stab sein. Das Stützelement 140 kann aber auch in jeder anderen Form ausgebildet sein, die es erlaubt das Stützelements 140 sicher im Halteelement 150 abzustützen. Zum Beispiel kann das Stützelement 140 die Form einer steifen Feder, eines Dreiecks, oder einer anderen regelmäßigen geometrischen Figur aufweisen. Gemäß einer Weiterbildung kann das Stützelement 140 die Form einer Spindel oder eines Stabsegments mit Rastausnehmungen aufweisen.

Insbesondere kann das Stützelement 140 federnd in einer Ausgangsstellung gehalten werden, in der das Stützelement 140 das Deichselelement 130 in der ersten Stellung hält. Zum Beispiel kann das Stützelement 140 mit einem Federelement verbunden sein, das am Verbindungselement 120, am Deichselelement 130 oder auch am Halteelement 150 angebracht ist, und das das Stützelement 140 bei Auslenkung oder Verschiebung gegen die Wirkung des Federelements durch z.B. Ziehen oder Drücken zurück in die Ausgangsstellung bewegt. Das Federelement kann hierbei z.B. eine Metall- oder Kunststofffeder sein. Genauso kann aber auch die Verbindung des Stützelements 140 zum Deichselelement 130 als ein oder mehrere, z.B. zwei, Gummipuffer ausgebildet sein, die dann das Federelement bilden. Das Stützelement 140 ist dann federnd und gelenkig in dem oder den Gummipuffer(n) gelagert und das Ausschwenken des Stützelements erfolgt durch eine Verformung der Gummipuffer. Gleichzeitig bringt die sich im Gummipuffer gegen die Verformung aufbauende Kraft das Stützelement 140 wieder in die Ausgangsstellung zurück, wenn keine äußere Kraft mehr auf das Stützelement wirkt.

Auch das Halteelement 150 kann jede Form aufweisen, die es erlaubt, den Stützanschlag 145 des Stützelements 140 sicher im Halteelement 150 abzustützen. So kann die Form des Halteelements 150 an die geometrische Form des Stützelements angepasst sein, z.B. als entsprechend geformte Aussparung im Verbindungselement oder als Kalotte mit einer entsprechenden geometrischen Form, die auf dem Verbindungselement 120 angebracht ist.

Soll nun das Deichselelement 130 aus der in FIG. 1A gezeigten ersten Stellung in die zweite Stellung gebracht werden, wird das Deichselelement 130, wie in FIG. 1B gezeigt, derart angehoben, dass sich der Stützanschlag 145 aus dem Halteelement 150 löst. Hierauf kann, wie in FIG. 1C gezeigt, das Deichselelement 130 in die zweite Stellung abgesenkt werden.

Um ein erneutes Abstützen des Stützanschlags 145 auf dem Halteelement 150 zu vermeiden, wird das Stützelement 140 beim Anheben des Deichselelements 130 derart ausgeschwenkt, dass bei einem Absenken des Deichselelements 130 kein Festsitzen des Stützanschlags 145 auf dem Halteelement 150 auftritt, das ein Absenken verhindern könnte.

Alternativ oder ergänzend kann das Stützelement 140 derart linear verschoben werden, dass beim Absenken des Deichselelements 130 kein Festsitzen des Stützanschlags 145 auf dem Halteelement 150 auftritt. Dazu wird das Stützelement 140 zum Beispiel entlang einer aus der Bildebene der FIG. 1A bis 1C herauszeigenden Richtung so weit verschoben, dass keine Interaktion zwischen dem Stützanschlag 145 und dem Halteelement 150 mehr auftreten kann. Dies kann zum Beispiel mittels einer Führungsschiene oder einer Kulissenführung geschehen. Des Weiteren kann eine Ausschwenkbewegung mit einer linearen Verschiebungsbewegung kombiniert werden, um beim Absenken des Deichselelements 130 eine Interaktion zwischen Stützanschlag 145 und Halteelement 150 zu vermeiden.

In den FIG. 1A bis 1C wird der Stützanschlag 145 des Stützelements 140 um die horizontale Achse 135 vom Verbindungselement 120 weg geschwenkt, um ein ungehindertes Absenken des Deichselelements 130 zu gewährleisten. Alternativ kann der Stützanschlag kann bei entsprechender Formgebung des Verbindungselements 120, des Deichselelements 130 und des Halteelements 150 auch in Richtung des Verbindungselements 120 geschwenkt werden. Alternativ kann das Stützelement 140 um eine Vertikale Achse oder eine Achse, die zwischen der Horizontalen und der Vertikalen interpoliert, geschwenkt werden.

Wie in FIG. 1C gezeigt, kann in der zweiten Stellung das Deichselelement 130 auf dem Halteelement 150 aufliegen. Das Deichselelement 130 kann aber auch durch ein weiteres, nicht gezeigtes Bauteil der Führungsvorrichtung 100, wie etwa einem Bolzen oder einer Achse am Verbindungselement 120 oder Halteelement 150, in der zweiten Stellung gehalten werden.

Durch die in FIG. 1A bis 1C gezeigte Ausführungsform ist es möglich, das Deichselelement 130 der Führungsvorrichtung 100 innerhalb weniger werkzeuglos auszuführender Schritte schnell aus einer ersten, ergonomischen Stellung in eine zweite Stellung zu bringen, die sich zum Unterfahren von Hindernissen eignet.

Durch Umkehr des in FIG. 1A bis 1C gezeigten Ablaufs kann das Deichselelement 130 ebenso schnell aus der zweiten Stellung wieder in die erste Stellung gebracht werden. Dazu wird das Deichselelement 130 aus der zweiten Stellung vertikal derart nach oben geschwenkt, dass durch Einschwenken und/oder Verschieben des Stützelements 140 die sichere Halterung des Deichselelements 130 über das Stützelement 140 und das Halteelement 150 in der ersten Stellung gewährleistet ist.

Es ist also möglich, schnell und ohne großen Aufwand zwischen der ersten und der zweiten Stellung zu wechseln.

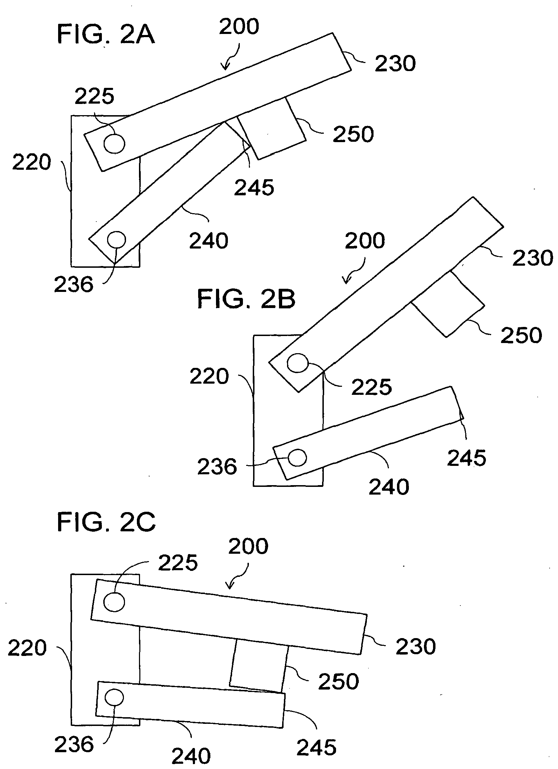

Gemäß einer in FIG. 2A bis 2C gezeigten Ausführungsform einer Führungsvorrichtung 200 ist ein Halteelement 250 nicht mit einem Verbindungselement 220 verbunden, sondern mit einem Deichselelement 230, das analog zur in FIG. 1A bis 1C gezeigten Ausführungsform über eine Achse 225 mit dem Verbindungselement 220 beweglich verbunden ist.

Ein Stützelement 240 ist dann nicht mit dem Deichselelement 230 verbunden, sondern mit dem Verbindungselement 220. Das Stützelement 240 kann mit dem Verbindungselement 220 über eine Achse 236 verbunden sein, die ein Ausschwenken und/oder Verschieben des Stützelements 240 erlaubt. Die Achse 236 kann dabei in vertikaler Richtung, in horizontaler Richtung oder in einer Richtung zwischen der Vertikalen und Horizontalen ausgebildet sein.

Die in FIG. 2A bis 2C dargestellte Ausführungsform stellt eine mechanische Umkehr der in Fig. 1A bis 1C dargestellten Ausführungsform dar. Das Deichselelement 230 wird also wiederum durch das Abstützen eines Stützanschlags 245 des Stützelements 240 auf dem Halteelement 250 in der ersten Stellung gehalten.

Nachdem der Stützanschlag 245, wie in FIG. 2B gezeigt, aus dem Halteelement 250 gelöst ist, nimmt das Deichselelement 130 die in FIG. 2C gezeigte zweite Stellung ein. Das Halten in der ersten Stellung erfolgt aufgrund des Gewichts des Deichselelements 230, das den Stützanschlag 245 auf das Halteelement 250 drückt, wodurch eine Gegenkraft erzeugt wird, die das Deichselelement 230 in der ersten Stellung hält.

Wird durch Anheben des Deichselelements 230 der Stützanschlag 245 aus dem Halteelement 250 gelöst und das Stützelement 240 ausgeschwenkt, z.B. nach unten, wie in FIG. 2B gezeigt, und/oder verschoben nimmt das Deichselelement 230 die zweite, zum Unterfahren von Hindernis geeignete Stellung ein. Das Deichselelement 230 kann hierbei durch Aufliegen auf dem Stützelement 240 in der zweiten Stellung gehalten werden, es kann aber auch durch ein weiteres Bauteil der Führungsvorrichtung 200 in der zweiten Stellung gehalten werden.

Um das Deichselelement 230 aus der zweiten Stellung in die erste Stellung zurück zu bringen, wird das Deichselelement 230 angehoben, das Stützelement 240 derart eingeschwenkt und/oder verschoben, dass der Stützanschlag 245 auf dem Halteelement 250 zu liegen kommt und dadurch die selbststützende Anordnung von Deichselelement 230, Stützelement 240, Halteelement 250 und Verbindungselement 220 wiederhergestellt ist, wie sie z.B. in FIG. 2A dargestellt ist.

Dadurch ist es auch für die in FIG. 2A bis 2C dargestellte Ausführungsform möglich, das Deichselelement 230 rasch und unkompliziert von einer ersten ergonomischen Arbeitsstellung in eine zweite Stellung zu bringen, die das Unterfahren von Hindernissen erlaubt.

Ebenso wie für die FIG. 1A bis 1C beschrieben, können die in den FIG. 2A bis 2C dargestellten Elemente jede andere als die gezeigte Form annehmen, solange ein gravitatives Abstützen des Stützanschlags 245 im Halteelement 250 möglich ist, das das Deichselelement 230 derart in der ersten Stellung hält, dass es, wie oben beschrieben, rasch und unkompliziert in die zweite Stellung abgesenkt werden kann. Insbesondere können die Bauelemente der Führungsvorrichtung 200 die oben in FIG. 1A bis 1C für die Führungsvorrichtung 100 beschriebenen Formen annehmen.

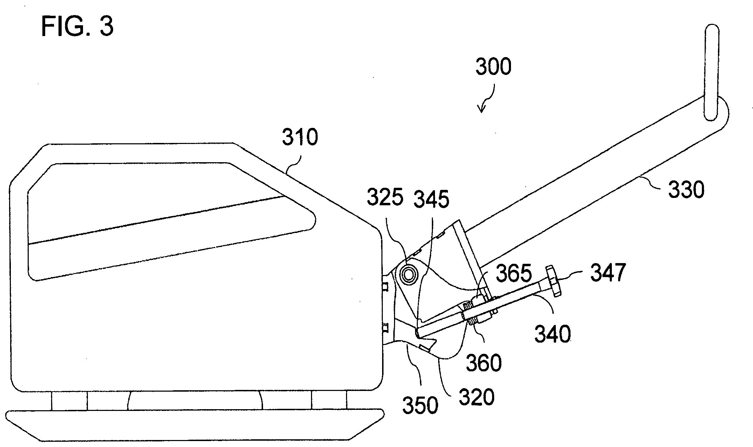

FIG. 3 zeigt eine Ausführungsform einer Führungsvorrichtung 300, die mit einer als Arbeitsgerät dienenden Bodenverdichtungsvorrichtung 310 verbunden ist. Die Führungsvorrichtung 300 weist einen als Verbindungselement dienenden Deichselblock 320 auf, der die Führungsvorrichtung 300 mit der Bodenverdichtungsvorrichtung 310 verbindet. Die Bodenverdichtungsvorrichtung 310 kann z.B. die Form einer Vibrationsplatte oder Vibrationswalze aufweisen. Die dargestellte Verbindung zwischen Deichselblock 320 und Bodenverdichtungsvorrichtung 310 wird über Befestigungsmittel, z.B. Schrauben oder Nieten, hergestellt.

Des Weiteren weist die Führungsvorrichtung 300 eine als Deichselelement dienende Deichsel 330 mit Haltegriff auf, die über ein Gelenk 325 beweglich mit dem Deichselblock 320 derart verbunden ist, dass die Deichsel 330 um das Gelenk 325 nach oben und unten geschwenkt werden kann. Gemäß einer weiteren, nicht dargestellten Ausführungsform ist die Deichsel direkt mit der Bodenverdichtungsvorrichtung verbunden. Das Verbindungselement ist dann integraler Bestandteil der Obermasse der Bodenverdichtungsvorrichtung.

In der Führungsvorrichtung 300 ist eine als Halteelement dienende Kalotte 350 mit dem Deichselblock 320 verbunden. Eine als Stützelement dienende Spindel 340 ist beweglich mit der Deichsel 330 verbunden. Dazu ist die Spindel 340 mit einem Gewindeblock 360 versehen und in den Gewindeblock 360 eingeschraubt. Der Gewindeblock 360 ist über Gummipuffer 365 an der Deichsel 330 angebunden und dadurch gelenkig und federnd gelagert. Wie in Fig. 3 gezeigt, kann es sich um zwei oberhalb und unterhalb der Spindel 340 angebrachte Gummipuffer 365 handeln. Der Gewindeblock 360 kann aber auch anders, z.B. mittels eines ringförmigen Gummipuffers 365 an die Deichsel 360 angebunden sein. Die Spindel 340 wird durch den oder die Gummipuffer 365 federnd in einer Ausgangsstellung gehalten, die eingenommen wird, wenn sich die Deichsel 330 in der ersten Stellung befindet. Durch Ausüben einer Kraft auf die Spindel 340 werden die oder der Gummipuffer 365 verformt und die Spindel 340 gegen die federnde Wirkung des oder der Gummipuffer 365 ausgelenkt. Wenn keine äußere Kraft mehr auf die Spindel 340 wirkt, wird sie also durch den oder die Gummipuffer 365 zurück in die Ausgangsstellung bewegt.

In FIG. 3 ist die Führungsvorrichtung 300 in einer ersten, zum ergonomischen Arbeiten geeigneten Stellung dargestellt. In dieser ersten Stellung stützt eine als Stützanschlag dienende Spitze 345 der Spindel 340 sich auf der Kalotte 350 auf und hält dadurch die Deichsel 330 in der ersten Stellung. Die Deichsel 330 wird also durch Eingreifen der Spitze 345 der Spindel 340 in eine entsprechend geformte Vertiefung der Kalotte 350 in der ersten Stellung gehalten.

Die Führungsvorrichtung 300 entspricht dem Aufbauprinzip der in FIG. 1A bis 1C gezeigten Ausführungsform. Es ist aber bei einer weiteren Ausführungsform auch möglich, die Spindel 340 mit dem Deichselblock 320 und die Kalotte 350 mit der Deichsel 330 zu verbinden. Dann sind die Gummipuffer 365 an dem Deichselblock 320 angebracht und verbinden die Spindel 340 mit dem Deichselblock 320. Die abstützende Wirkung wird durch ein Abstützen der Spitze 345 auf der an der Deichsel 330 angebrachten Kalotte 350 erzeugt. Diese mechanische Umkehr der in FIG. 3 dargestellten Ausführungsform entspricht im Prinzip der Ausführungsform, die in den FIG. 2A bis 2C dargestellt ist.

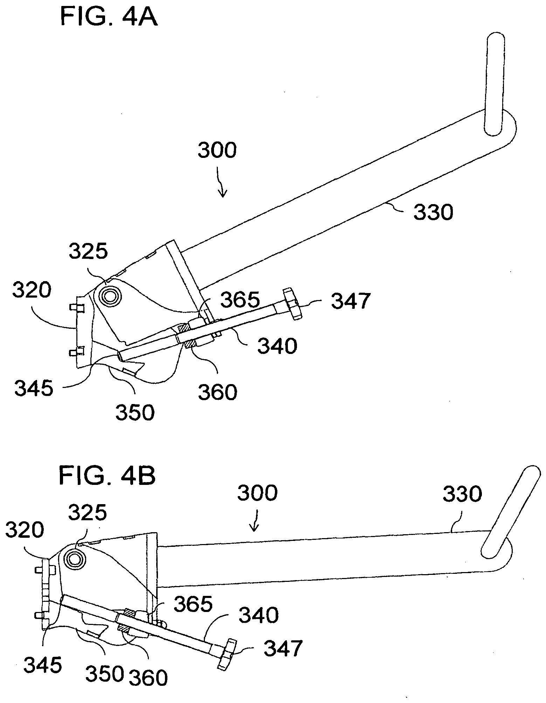

In den FIG. 4A und 4B ist für die Führungsvorrichtung 300 der Fig. 3 der Wechsel aus der ersten Stellung in die zweite Stellung gezeigt. Analog zu der in FIG. 1A bis 1C dargestellten Ausführungsform wird der Stellungswechsel durch Schwenken (Anheben) der Deichsel 330 relativ zum Deichselblock 320 um die Achse 325 und gleichzeitiges Ausschwenken der Spindel 340 aus der Kalotte 350 ermöglicht.

Hierbei wird aber im Gegensatz zu den FIG. 1A bis 1C die Spitze 345 nicht vom Deichselblock 320 weggeschwenkt, sondern zu dem Deichselblock 320 hin. Dies ist hier, bedingt durch die Form der Kalotte 350 und des Deichselblocks 320, möglich, wobei die Spindel 340 in der zweiten Stellung im Wesentlichen parallel am Halteelement 350 anliegt.

In der dargestellten Ausführungsform ist die Verbindung zwischen Spindel 340 und Deichsel 330 wie oben beschrieben durch den oder die Gummipuffer 365 und den Gewindeblock 360 ausgebildet. Der Gewindeblock 360 ist über die Gummipuffer 365 an die Deichsel 330 angebunden und gelenkig und federnd gelagert. Die Gummipuffer 365 dienen als Federelement, das die Spindel in einer der ersten Stellung entsprechenden Ausgangsstellung hält. Sie ermöglichen ein Ausschwenken der in den Gewindeblock 360 eingeschraubten Spindel 340.

Wie in den FIG. 4A und 4B gezeigt, werden der oder die Gummipuffer 365 beim Ausschwenken der Spindel 340 verformt. Das Ausschwenken erfolgt gegen die federnde Wirkung der Gummipuffer 365. Dadurch ist zum einen gewährleistet, dass die durch die Bodenverdichtungsvorrichtung erzeugten Schwingungen, die über den Deichselblock 320, die Kalotte 350 und die Spindel 340 auf die Deichsel 330 übertragen werden, durch die Gummipuffer 365 gedämpft werden. Zum anderen gewährleisten die Gummipuffer 365, dass die Spindel 340 bei Fehlen einer äußeren Kraft in die Ausgangsstellung zurück bewegt wird und somit die Spitze 345 der Spindel 340 bei Zurückstellen der Deichsel 330 aus der zweiten in die erste Stellung automatisch in der dafür vorgesehenen Vertiefung der Kalotte 350 Halt findet. Weitere Federelemente, wie etwa zusätzliche Federn, werden dazu nicht benötigt, was zu einer Vereinfachung des Aufbaus der Führungsvorrichtung 300 führt.

Das Ausschwenken der Spindel 340 und damit das Lösen der Spitze 345 aus der Kalotte 350 erfolgt durch Ausüben einer Kraft auf einen als Übertragungselement dienenden Handgriff 347 der Spindel 340. In der dargestellten Ausführungsform kann der Handgriff 347 der Spindel 340 auch zum Einschrauben der Spindel 340 in den Gewindeblock 360 dienen. Durch Drücken des Handgriffs 347 nach unten, wird die Spindel 340 derart bewegt, dass sich ihre Spitze 345 nach oben aus der Kalotte 350 löst und dadurch die abstützende Wirkung, die die Deichsel 330 in der ersten Stellung hält, endet.

Alternativ ist die Spindel 340 in einer Kulissenführung gelagert, die es ermöglicht, die Spindel 340 linear zu verschieben, etwa entlang einer aus der Bildebene der FIG. 4A und 4B heraus zeigenden Richtung. Die Spindel 340 wird dann durch Verschieben entlang der Kulissenführung aus der Kalotte 350 gelöst. Das Verschieben kann hierbei entgegen einer rückstellenden Kraft geschehen, zum Beispiel gegen eine Federkraft von Federelementen.

Hierauf kann die Deichsel 330 in die in FIG. 4B gezeigte zweite Stellung abgesenkt werden. Die Deichsel 330 kann durch die Spindel 340 in der zweiten Stellung gehalten werden. Sie kann aber auch durch weitere Bauelemente der Führungsvorrichtung 300 in der zweiten Stellung gehalten werden, z.B. durch einen Anschlag oder einen Bolzen, der den Deichselblock 320 in einer zur Zeichnungsebene senkrechten Richtung gänzlich durchdringt und auf dem die Deichsel 330 in der zweiten Stellung aufliegt.

In der zweiten Stellung liegt die Spitze 345 der Spindel 340 unter Vorspannung an der Schräge über der Kalotte 350 an. Soll die Deichsel 330 nun wieder in die erste Stellung, d.h. auf die ursprüngliche Arbeitshöhe, gebracht werden, so wird sie angehoben und so lange nach oben bewegt, bis die Spitze 345 der Spindel 340, durch die federnde Lagerung der Spindel 340 nach unten gedrückt, wieder in der Kalotte 350 einrastet.

Die in den FIG. 3, 4A und 4B gezeigte Ausführungsform ermöglicht eine Höheneinstellung der Deichsel 330 in der ersten Stellung. In der gezeigten Ausführungsform kann die Höheneinstellung durch Einschrauben der Spindel 340 in den Gewindeblock 360 erreicht werden. Je weiter sich der Handgriff 347 dem Gewindeblock 360 durch fortwährendes Einschrauben nähert, desto steiler wird die Neigung der Deichsel 330. Umgekehrt wird durch Ausschrauben der Spindel 340 aus dem Gewindeblock 360 eine flachere Arbeitsstellung hergestellt. Es wird also die Winkelstellung zwischen Deichsel 330 und Deichselblock 320 durch Einschrauben der Spindel 340 in den Gewindeblock 360 eingestellt.

Es ist aber auch möglich, die genaue Position der Deichsel 330 in der ersten Stellung anders als in FIG. 3, 4A und 4B gezeigt einzustellen. Gemäß einer Ausführungsform weist das Stützelement 140 ein Höheneinstellungselement auf, das zum Einstellen einer Winkelstellung zwischen Verbindungselement 120 und Deichselelement 130 und somit zum Einstellen einer Entfernung des Deichselelements 130 vom Erdboden geeignet ist.

Das Höheneinstellungselement kann zum Beispiel ein Stabsegment mit Rastausnehmungen aufweisen. Bei den Rastausnehmungen kann es sich um Langlöcher handeln. Dann wird die Winkelstellung des Deichselelements 130 zum Verbindungselement 120 in der ersten Stellung durch Klemmen von Befestigungsmitteln in eine der Rastausnehmungen des Stabsegments eingestellt. Die durch das Befestigungsmittel gebildete Achse, dient gleichzeitig als die bewegliche Verbindung des Stützelements 140 mit dem Deichselelement 130 oder dem Verbindungselement 120.

Es ist aber auch möglich, eine Höhenverstellung in der ersten Stellung durch eine Veränderung der Position des Halteelements 150 herbeizuführen. Wenn das Halteelement 150 an dem Verbindungselement 120 angebracht ist, kann die Position des Deichselelements 130 in der ersten Stellung direkt durch Veränderung der Position des Halteelements 150 auf dem Verbindungselement 120 verändert werden.

Wenn zum Beispiel das Halteelement 150 mit Bezug auf die in FIG. 1A dargestellte Position weiter oben positioniert wird, wird der Neigungswinkel des Deichselelements 130 steiler, was einer weiter oben liegenden Arbeitsposition entspricht. Wird das Halteelement 150 weiter unten positioniert, wird auch die Arbeitsposition weiter unten liegen.

Genauso kann in der in FIG. 2A dargstellten mechanischen Umkehr der Ausführungsform von FIG. 1A durch Positionierung des Halteelements 250 näher zur Achse 225 hin die Arbeitsposition weiter nach oben verlegt werden und durch eine Positionierung in die entgegengesetzte Richtung weiter nach unten.

Durch diese verschiedenen Arten der Höheneinstellung in der ersten Position ist es möglich, nicht nur eine rasche und unkomplizierte Absenkung des Deichselelements 130 aus der ersten Stellung in die zweite Stellung zu gewährleisten, sondern auch eine optimale Arbeitshöhe des Deichselelements 130 in der ersten Stellung zu gewährleisten.

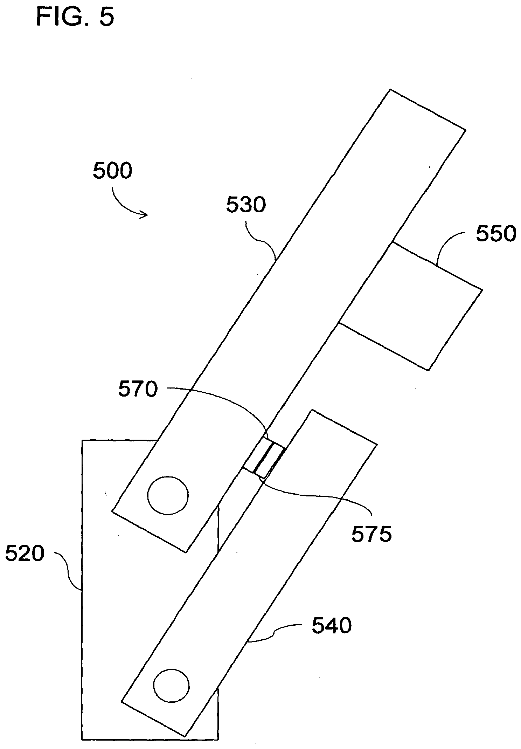

In der in FIG. 5 im Prinzip dargestellten Ausführungsform einer Führungsvorrichtung 500 weist ein Deichselelement 530 ein erstes Fixierelement 570 und ein Stützelement 540 ein zweites Fixierelement 575 auf. Des Weiteren weist die Führungsvorrichtung 500 ein Verbindungselement 520 und ein Halteelement 550 auf. Die Funktion der Führungsvorrichtung 500 entspricht der in den FIG. 2A bis 2C dargestellten Ausführungsform. Deshalb wird auf eine weitere genaue Beschreibung der Interaktion der Bauteile verzichtet und auf die Beschreibung der FIG. 2A bis 2C verwiesen.

Das erste Fixierelement 570 und das zweite Fixierelement 575 sind derart auf dem Deichselelement 530 und dem Stützelement 540 angeordnet, dass sie aneinander anschlagen oder ineinander einrasten können, wenn das Deichselelement 530 sich in einer dritten Stellung befindet, die oberhalb der ersten Stellung liegt und das Stützelement 540 eingeschwenkt ist. Das erste und das zweite Fixierelement 570, 575 können dabei eine durch Befestigungsmittel wie Schrauben oder Nieten vermittelte feste Verbindung eingehen, die das Deichselelement 530 fest in der dritten Position hält.

Die Fixierelemente 570, 575 erlauben es, das Deichselelement 530 der Führungsvorrichtung 500 in die dritte Position zu bringen, die nahezu senkrecht ist und sich zum Beispiel zum Transport oder zur Lagerung eines mittels des Verbindungselements 520 mit der Führungsvorrichtung 500 verbundenen Arbeitsgeräts besonders eignet. Gleichwohl kann durch die schnell lösbare Ausgestaltung der Fixierelemente 570, 575 ein rasches Zurückbringen des Deichselelements 530 in die erste Stellung gewährleistet werden, was eine rasche und unkomplizierte Wiederaufnahme eines Arbeitsbetriebs mit dem Arbeitsgerät erlaubt.

Das erste und das zweite Fixierelement 570, 575 können auch als ein Paar von Haken oder Einrastmöglichkeiten ausgebildet sein, die es ermöglichen, die Fixierung zu lösen, wenn das Stützelement 540 ausgeschwenkt wird. Zum Beispiel kann es sich beim zweiten Fixierelement 575 um eine Spitze des Stützelements 540 handeln, wenn das erste Fixierelement 570 als Kalotte ausgebildet ist, die die Spitze des Stützelements 540 derart aufnimmt, dass eine sichere Verbindung zwischen Stützelement 540 und Kalotte entsteht. Es kann sich beim zweiten Fixierelement 575 aber auch um einen Sperrzahn handeln, der in das erste Fixierelement 570, z.B. eine Kalotte, einrastet. Der Sperrzahn kann zum Beispiel mit einem Gewindeblock verbunden sein, wenn das Stützelement 540 wie in FIG. 3 bis 4B gezeigt ausgebildet ist.

Die Funktion der ersten und zweiten Fixierelemente 570, 575 wurde oben mit Bezug auf die Ausführungsform der FIG. 2A bis 2C beschrieben. Gemäß einer anderen Ausführungsform ist es möglich, dass das erste und das zweite Fixierelement 570, 575 an einer Führungsvorrichtung gemäß der Ausführungsform der FIG. 1A bis 1C angebracht sind. Die oben gemachten Ausführungen gelten dann analog.

Die mit Bezug auf die Figuren beschriebenen Ausführungsformen erlauben einen raschen, unkomplizierten und werkzeuglos ausführbaren Wechsel eines Deichselelements zum Führen eines Arbeitsgeräts zwischen einer ersten Stellung, in der das Arbeitsgerät im Normalbetrieb ergonomisch geführt werden kann, und einer zweiten Stellung, die sich zum Unterfahren von Hindernissen eignet. Soll etwa die Deichsel schnell abgesenkt werden, genügt es, sie leicht anzuheben, um die Spindel zu entlasten. Daraufhin wird der Handgriff der Spindel nach unten gedrückt und die Spindel aus der Kalotte ausgeschwenkt. Während der Handgriff der Spindel gedrückt bleibt, um ein Zurückfedern der Spindel in die Ausgangsstellung zu verhindern, wird die Deichsel abgesenkt, bis sie, durch einen Endanschlag abgestützt, die zweite Stellung einnimmt.

Soll die Deichsel nun wieder in die erste Stellung, d.h. auf die ursprüngliche Arbeitshöhe, gebracht werden, so wird sie angehoben und so lange nach oben bewegt, bis die Spitze der Spindel, durch die federnde Lagerung der Spindel nach unten gedrückt, wieder in der Kalotte einrastet.

Die oben beschriebenen Ausführungsformen sind frei kombinierbar, sofern sie sich nicht ausschließen.

## Patentansprüche

1. Führungsvorrichtung (100) zum Führen eines Arbeitsgeräts (310), mit
einem Verbindungselement (120);
einem Deichselelement (130), das mit dem Verbindungselement (120) verbunden ist und relativ zu dem Verbindungselement (120) in eine erste Stellung oder eine zweite Stellung bewegbar ist;
einem Stützelement (140) mit einem Stützanschlag (145), das durch Abstützen des Stützanschlags (145) an einem Halteelement (150) das Deichselelement (130) in der ersten Stellung hält; wobei
das Deichselelement (130) in der zweiten Stellung niedriger liegt als in der ersten Stellung;
das Deichselelement (130) über das Verbindungselement (120) mit dem Arbeitsgerät (310) verbindbar ist;
entweder das Halteelement (150) mit dem Verbindungselement (120) verbunden ist und das Stützelement (140) mit dem Deichselelement (130) beweglich verbunden ist oder das Halteelement (150) mit dem Deichselelement (130) verbunden ist und das Stützelement (140) mit dem Verbindungselement (120) beweglich verbunden ist;
das Deichselelement (130) nach Lösen des Stützanschlags (145) aus dem Halteelement (150) in die zweite Stellung verschwenkbar ist; und wobei
das Stützelement (140) ein Höheneinstellungselement zum Einstellen einer Winkelstellung zwischen dem Verbindungselement (120) und dem Deichselelements (130) in der ersten Stellung aufweist.

2. Führungsvorrichtung (100) nach Anspruch 1, wobei
der Stützanschlag (145) dann von dem Halteelement (150) lösbar ist, wenn das Deichselelement (130) mit Bezug auf das Verbindungselement (120) in vertikaler Richtung nach oben geschwenkt ist; und wobei
daran anschließend das Deichselelement (130) dann in die zweite Stellung verschwenkbar ist, wenn das aus dem Halteelement (150) gelöste Stützelement (140) ausgeschwenkt ist und das Deichselelement (130) in vertikaler Richtung nach unten geschwenkt ist.

3. Führungsvorrichtung (100) nach einem der vorherigen Ansprüche, wobei
das Deichselelement (130 aus der zweiten Stellung in vertikaler Richtung nach oben in die erste Stellung schwenkbar ist und
das Deichselelement (130) dann in der ersten Stellung gehalten wird, wenn das Stützelement (140) in das Halteelement (150) eingeschwenkt ist.

4. Führungsvorrichtung (100) nach einem der vorherigen Ansprüche, wobei
das Stützelement (140) ein Übertragungselement (347) aufweist, und wobei
der Stützänschlag (145) durch Ausüben einer Kraft auf das Übertragungselement (347) aus dem Halteelement (150) lösbar ist.

5. Führungsvorrichtung (100) nach einem der vorherigen Ansprüche, wobei ein Federelement (365) das Stützelement (140) federnd in einer Ausgangsstellung hält, in der das Stützelement (140) das Deichselelement (130) in der ersten Stellung hält.

6. Führungsvorrichtung (100) nach einem der vorherigen Ansprüche, wobei
das Höheneinstellungselement ein Stabsegment mit Rastausnehmungen aufweist; und
die Winkelstellung zwischen dem Verbindungselement (120) und dem Deichselelements (130) in der ersten Stellung durch Klemmen eines Befestigungsmittels in eine der Rastausnehmungen des Stabsegments einstellbar ist.

7. Führungsvorrichtung (100) nach einem der Ansprüche 1 bis 5, wobei das Halteelement (150) mit dem Verbindungselement (120) verbunden ist und das Stützelement (140) mit dem Deichselelement (130) beweglich verbunden ist.

8. Führungsvorrichtung (100) nach Anspruch 7, wobei
das Höheneinstellungselement eine Spindel aufweist;
die Verbindung des Stützelements (340) mit dem Deichselelement (330) als beweglich verbundener Gewindeblock (360) ausgebildet ist; und
die Winkelstellung zwischen dem Verbindungselement (120) und dem Deichselelements (130) in der ersten Stellung durch Einschrauben der Spindel in den Gewindeblock (360) einstellbar ist.

9. Führungsvorrichtung (100) nach einem der Ansprüche 7 und 8, wobei die Winkelstellung zwischen dem Verbindungselement (120) und dem Deichselelements (130) in der ersten Stellung durch Verändern der Position des Halteelements (150) am Verbindungselement (120) einstellbar ist.

10. Führungsvorrichtung (100) nach einem der Ansprüche 7 bis 9, wobei das Stützelement (140) relativ zu dem Deichselelement (130) um eine horizontale Achse oder um eine vertikale Achse schwenkbar ist.

11. Führungsvorrichtung (500) nach einem der Ansprüche 7 bis 10, wobei
das Verbindungselement (520) ein erstes Fixierelement (570) aufweist;
das Stützelement (540) ein zweites Fixierelement (575) aufweist;
das erste Fixierelement (570) dann mit dem zweiten Fixierelement (575) einrastet und das Deichselelement (530) in einer dritten Stellung hält, wenn das Deichselelement (530) nach Schwenken in vertikaler Richtung nach oben die dritte Stellung einnimmt;
das zweite Fixierelement (575) dann aus dem ersten Fixierelement (570) gelöst ist, wenn das Stützelement (540) ausgeschwenkt ist; und
sich bei bestimmungsgemäßem Gebrauch der Führungsvorrichtung (500) die dritte Stellung oberhalb der ersten Stellung befindet.

12. Führungsvorrichtung (100) nach einem der Ansprüche 1 bis 5, wobei das Halteelement (150) mit dem Deichselelement (130) verbunden ist und das Stützelement (140) mit dem Verbindungselement (120) beweglich verbunden ist

13. Bodenverdichtungsvorrichtung mit einer Führungsvorrichtung (100) nach einem der vorherigen Ansprüche.

## Claims

1. Guiding apparatus (100) for guiding a tool (310), comprising
a connecting element (120);
a drawbar element (130) which is connected to the connecting element (120) and can be moved relative to the connecting element (120) to a first position or a second position;
a supporting element (140) having a supporting stop (145) which holds the drawbar element (130) in the first position by supporting the supporting stop (145) on a holding element (150); wherein
the drawbar element (130) is lower in the second position than in the first position;
the drawbar element (130) can be connected to the tool (310) by means of the connecting element (120);
either the holding element (150) is connected to the connecting element (120) and the supporting element (140) is movably connected to the drawbar element (130) or the holding element (150) is connected to the drawbar element (130) and the supporting element (140) is movably connected to the connecting element (120);
the drawbar element (130) can be pivoted to the second position after the supporting stop (145) is released from the holding element (150); and wherein
the supporting element (140) has a height-adjusting element for adjusting an angle position between the connecting element (120) and the drawbar element (130) in the first position.

2. Guiding apparatus (100) as claimed in claim 1, wherein
the supporting stop (145) can be released from the holding element (150) when the drawbar element (130) is pivoted in a vertical direction upwards with respect to the connecting element (120); and wherein
subsequently thereto the drawbar element (130) can be pivoted to the second position when the supporting element (140) released from the holding element (150) is pivoted out and the drawbar element (130) is pivoted in a vertical direction downwards.

3. Guiding apparatus (100) as claimed in any one of the preceding claims, wherein
the drawbar element (130) can be pivoted from the second position in a vertical direction upwards to the first position and
the drawbar element (130) is held in the first position when the supporting element (140) is pivoted into the holding element (150).

4. Guiding apparatus (100) as claimed in any one of the preceding claims, wherein
the supporting element (140) has a transmission element (347), and wherein
the supporting stop (145) can be released from the holding element (150) by exerting a force upon the transmission element (347).

5. Guiding apparatus (100) as claimed in any one of the preceding claims, wherein a spring element (365) holds the supporting element (140) resiliently in an initial position, in which the supporting element (140) holds the drawbar element (130) in the first position.

6. Guiding apparatus (100) as claimed in any one of the preceding claims, wherein
the height-adjusting element has a bar segment with latching recesses; and
the angle position between the connecting element (120) and the drawbar element (130) in the first position can be adjusted by clamping a fastening means into one of the latching recesses of the bar segment.

7. Guiding apparatus (100) as claimed in any one of claims 1 to 5, wherein the holding element (150) is connected to the connecting element (120) and the supporting element (140) is movably connected to the drawbar element (130).

8. Guiding apparatus (100) as claimed in claim 7, wherein
the height-adjusting element has a spindle;
the connection of the supporting element (340) to the drawbar element (330) is configured as a movably connected threaded block (360); and
the angle position between the connecting element (120) and the drawbar element (130) in the first position can be adjusted by screwing the spindle into the threaded block (360).

9. Guiding apparatus (100) as claimed in any one of claims 7 and 8, wherein the angle position between the connecting element (120) and the drawbar element (130) in the first position can be adjusted by changing the position of the holding element (150) on the connecting element (120).

10. Guiding apparatus (100) as claimed in any one of claims 7 to 9, wherein the supporting element (140) can be pivoted relative to the drawbar element (130) about a horizontal axis or about a vertical axis.

11. Guiding apparatus (500) as claimed in any one of claims 7 to 10, wherein
the connecting element (520) has a first fixing element (570);
the supporting element (540) has a second fixing element (575);
the first fixing element (570) latches with the second fixing element (575) and holds the drawbar element (530) in a third position when the drawbar element (530) assumes the third position after pivoting in a vertical direction upwards;
the second fixing element (575) is released from the first fixing element (570) when the supporting element (540) is pivoted out; and
when the guiding apparatus (500) is used as intended the third position is located above the first position.

12. Guiding apparatus (100) as claimed in any one of claims 1 to 5, wherein the holding element (150) is connected to the drawbar element (130) and the supporting element (140) is movably connected to the connecting element (120).

13. Ground compacting apparatus comprising a guiding apparatus (100) as claimed in any one of the preceding claims.

## Revendications

1. Dispositif de guidage (100) pour le guidage d'un outil (310), avec un élément de liaison (120) ;
un élément à barre de traction (130), qui est relié avec l'élément de liaison (120) et qui est mobile par rapport à l'élément de liaison (120) vers une première position ou une deuxième position ;
un élément de soutien (140) avec une butée de soutien (145), qui maintient l'élément à barre de traction (130) dans une première position par le soutien de la butée de soutien (145) contre un élément de maintien (150) ;
l'élément à barre de traction (130) se trouvant, dans la deuxième position, plus bas que dans la première position ;
l'élément à barre de traction (130) pouvant être relié à l'outil (310) par l'intermédiaire de l'élément de liaison (120) ;
soit l'élément de maintien (150) est relié avec l'élément de liaison (120) et l'élément de soutien (140) est relié de manière mobile avec l'élément à barre de traction (130) soit l'élément de maintien (150) est relié à l'élément à barre de traction (130) et l'élément de soutien (140) est relié de manière mobile à l'élément de liaison (120) ;
l'élément à barre de traction (130) pouvant être pivoté vers la deuxième position après détachement de la butée de soutien (145) de l'élément de maintien (150) ; et
l'élément de soutien (140) comprenant un élément de réglage en hauteur pour le réglage d'une position angulaire entre l'élément de liaison (120) et l'élément à barre de traction (130) dans la première position.

2. Dispositif de guidage (100) selon la revendication 1,
la butée de soutien (145) pouvant être détachée de l'élément de maintien (150) lorsque l'élément à barre de traction (130) est pivoté dans la direction verticale vers le haut par rapport à l'élément de liaison (120) ; et
l'élément à barre de traction (130) pouvant en suite être pivoté vers la deuxième position lorsque l'élément de soutien (140) détaché de l'élément de maintien (150) est déplié et lorsque l'élément à barre de traction (130) est pivoté dans la direction verticale vers le bas.

3. Dispositif de guidage (100) selon l'une des revendications précédentes,
l'élément à barre de traction (130) pouvant être pivoté de la deuxième position dans la direction verticale vers le haut vers la première position et
l'élément à barre de traction (130) étant maintenu dans la première position lorsque l'élément de soutien (140) est replié dans l'élément de maintien (150).

4. Dispositif de guidage (100) selon l'une des revendications précédentes,
l'élément de soutien (140) comprenant un élément de transmission (347) et
la butée de soutien (145) pouvant être détachée de l'élément de maintien (150) par l'application d'une force sur l'élément de transmission (347).

5. Dispositif de guidage (100) selon l'une des revendications précédentes, un élément à ressort (365) maintenant l'élément de soutien (140) de manière élastique dans une position initiale, dans laquelle l'élément de soutien (140) maintient l'élément à barre de traction (130) dans la première position.

6. Dispositif de guidage (100) selon l'une des revendications précédentes,
l'élément de réglage en hauteur comprenant un segment de tige avec des évidements d'encliquetage ; et
la position angulaire entre l'élément de liaison (120) et l'élément à barre de traction (130) peut être réglée dans la première position par blocage d'un moyen de fixation dans un des évidements d'encliquetage du segment de tige.

7. Dispositif de guidage (100) selon l'une des revendications 1 à 5, l'élément de maintien (150) étant relié avec l'élément de liaison (120) et l'élément de soutien (140) étant relié de manière mobile avec l'élément à barre de traction (130).

8. Dispositif de guidage (100) selon la revendication 7,
l'élément de réglage en hauteur comprenant une broche ;
la liaison de l'élément de soutien (340) avec l'élément à barre de traction (330) étant conçue comme un bloc fileté (360) relié de manière mobile ; et
la position angulaire entre l'élément de liaison (120) et l'élément à barre de traction (130) dans la première position peut être réglée par vissage de la broche dans le bloc fileté (360).

9. Dispositif de guidage (100) selon l'une des revendications 7 et 8, la position angulaire entre l'élément de liaison (120) et l'élément à barre de traction (130) dans la première position peut être réglée par modification de la position de l'élément de maintien (150) sur l'élément de liaison (120).

10. Dispositif de guidage (100) selon l'une des revendications 7 à 9, l'élément de soutien (140) pouvant être pivoté par rapport à l'élément à barre de traction (130) autour d'un axe horizontal ou autour d'un axe vertical.

11. Dispositif de guidage (500) selon l'une des revendications 7 à 10,
l'élément de liaison (520) comprenant un premier élément de fixation (570) ;
l'élément de soutien (540) comprenant un deuxième élément de fixation (575) ;
le premier élément de fixation (570) s'encliquetant avec le deuxième élément de fixation (575) et maintenant l'élément à barre de traction (530) dans une troisième position lorsque l'élément à barre de traction (530) prend la troisième position après pivotement en direction verticale vers le haut ;
le deuxième élément de fixation (575) est détaché du premier élément de fixation (570) lorsque l'élément de soutien (540) est déplié ; et
dans le cas d'une utilisation conforme à l'usage prévu du dispositif de guidage (500), la troisième position se trouve au-dessus de la première position.

12. Dispositif de guidage (100) selon l'une des revendications 1 à 5, l'élément de maintien (150) étant relié avec l'élément à barre de traction (130) et l'élément de soutien (140) étant relié de manière mobile avec l'élément de liaison (120).

13. Dispositif de compactage du sol avec un dispositif de guidage (100) selon l'une des revendications précédentes.
